# EUROPEAN PATENT SPECIFICATION

(11) **EP 1 988 738 B1**
(45) Date of publication and mention of the grant of the patent: **10.04.2013**
(21) Application number: 08155573.2
(22) Date of filing: 02.05.2008
(51) Int. Cl.: H04W 36/00

(54) **Method for vertical handover in wireless communication system**
Verfahren für vertikale Übergabe in einem drahtlosen Kommunikationssystem
Procédé de transfert vertical dans un système de communication sans fil

(30) Priority: 04.05.2007 KR 20070043403
(43) Date of publication of application: 05.11.2008
(73) Proprietor: Postech Academy-Industry Foundation, Kyungsangbuk-do 790-784 (KR)
(72) Inventor: Suh, Young-Joo Dept. of Computer Science and Engineering, Pohang-city, 790-784, Kyungsangbuk-do (KR); Lim, Wan-Seon Dept. of Computer Science and Engineering, Pohang-city, 790-784, Kyungsangbuk-do (KR); Kim, Yong-Sung Dept. of Computer Science and Engineering, Pohang-city, 790-784, Kyungsangbuk-do (KR); Kim, Woo-Jae Dept. of Computer Science and Engineering, Pohang-city, 790-784, Kyungsangbuk-do (KR)
(74) Representative: Augarde, Eric

(56) References cited:
- US-A1- 2006 268 782
- HENRIK PETANDER NATIONAL ICT AUSTRALIA: "Bicasting with Buffering and Selective Delivery for Fast Handovers for Mobile IPv6; draft-petander-mipshop-fmipv6-bbsd-00.txt" , 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, 16 October 2006 (2006-10-16), XP015050301, ISSN: 0000-0004
- QAZI BOULAND MUSSABBIR AND WENBING YAO: "Optimized FMIPv6 Handover using IEEE802.21 MIH Services", MOBIARCH 06, ACM, SAN FRANCISCO, CA, USA, 1 December 2006 (2006-12-01), pages 43-48, XP007905499,
- "Draft IEEE Standard for Local and Metropolitan Area Networks: Media Independent Handover Services", IEEE P802.21/D03.00,, 1 December 2006 (2006-12-01), page 269PP, XP007905347,
- YOON YOUNG AN ET AL: "Reduction of Handover Latency Using MIH Services in MIPv6", ADVANCED INFORMATION NETWORKING AND APPLICATIONS, 2006. AINA 2006. 20T H INTERNATIONAL CONFERENCE ON VIENNA, AUSTRIA 18-20 APRIL 2006, PISCATAWAY, NJ, USA,IEEE, vol. 2, 18 April 2006 (2006-04-18), pages 229-234, XP010915366, DOI: 10.1109/AINA.2006.283 ISBN: 978-0-7695-2466-5

## Description

### CROSS-REFERENCE TO RELATED PATENT APPLICATION

This application claims the benefit of Korean Patent Application No. 10-2007-0043403, filed on May 04, 2007, in the Korean Intellectual Property Office.

### BACKGROUND OF THE INVENTION

### 1. Field of the Invention

The present invention relates to an apparatus and method for a vertical handover in a wireless communication system, and more particularly, to an apparatus and method for a vertical handover based on a media independent handover (MIH) in a wireless communication system.

### 2. Description of the Related Art

Usually, a wireless communication system is configured with several networks according to the development of communication technology. For the wireless communication system, much research has been conducted for integrating systems using different networks to provide a service desired by a user. For example, a fourth generation (4G) communication system has been developed to increase a data rate according to a high concern to a multimedia service. The 4G communication system includes, for example, a wireless local area network (WLAN) of the Institute of Electrical and Electronics Engineers (IEEE) 802.11 group and a wireless metropolitan area network (WMAN) of the IEEE 802.16 group.

For the wireless communication system, schemes for integrating different networks, such as integration of a conventional 3G communication system and a 4G communication system or integration of a WLAN network and a WMAN network, have been developed so that a user can perform communication using several networks.

The wireless communication system uses integration schemes using two architectures for integrating different networks. The first integration scheme is a strong joint architecture, wherein integration is performed by applying a single wireless access technology to different networks. For example, when a single wireless access technology is applied to the WLAN network and the WMAN network, the wireless communication system can provide a WMAN service to a WLAN user without any change in a terminal. In this case, when the first integration scheme is applied to the WLAN network and the WMAN network, the WMAN service and mobility can be supported to the WLAN user without any change in the terminal. However, the first integration scheme has a problem in that a new interface must be defined to apply a single wireless access technology to the WLAN network and the WMAN network.

The second integration scheme is a weak joint architecture, wherein different networks are integrated based on the Internet. Since the second integration scheme can more easily integrate different networks as compared to the first integration scheme, the second integration scheme has advantages of a low cost and good extensibility. However, the second integration scheme needs a mobility management protocol, such as mobile Internet protocol version 6 (MIPv6) or fast handover MIPv6 (FMIPv6), to support a vertical handover.

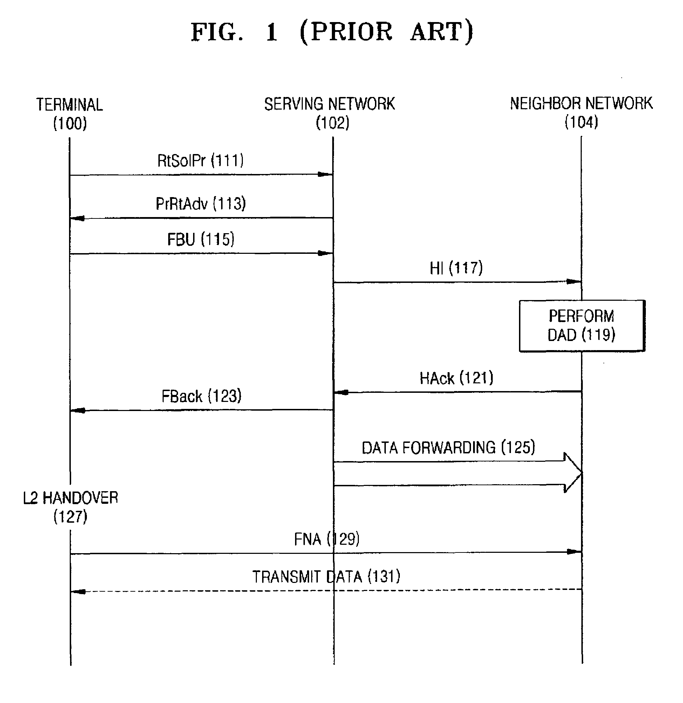

FMIPv6 is a mobility management protocol suggested to improve a handover delay time and performance degradation of MIPv6, and operates as illustrated in FIG. 1.

FIG. 1 is a signaling diagram for performing a handover in a conventional wireless communication system. In FIG. 1, a serving network 102 and a neighbor network 104 denote an access router. Since FMIPv6 operates after a terminal 100, selects a target network for handover from among neighbor networks in layer 2 (L2), the neighbor network 104 indicates the target network of the terminal 100 for handover.

Referring to FIG. 1, when a trigger occurs in a media access control (MAC) layer, the terminal 100 of the wireless communication system determines that a handover is necessary, and transmits a neighbor network information request message RtSoIPr to the serving network 102 in operation 111.

When the serving network 102 receives RtSoIPr, the serving network 102 transmits a neighbor network information response message PrRtAdv containing information on the neighbor network 104 to the terminal 100 in operation 113.

The terminal 100 gets the information on the neighbor network 104 from the message PrRtAdv received from the serving network 102. The terminal 100 generates a care-of-address (CoA) on the neighbor network 104 using the information on the neighbor network 104.

After generating the CoA on the neighbor network 104, the terminal 100 transmits a fast binding update (FBU) message containing the CoA on the neighbor network 104 to the serving network 102 in operation 115.

After the serving network 102 receives the CoA contained in the FBU message, the serving network 102 transmits a handover initiate (HI) message containing the CoA to the neighbor network 104 in operation 117.

The neighbor network 104 gets the CoA from the HI message and determines by performing duplicate address detection (DAD) in operation 119 whether the CoA is available. That is, the neighbor network 104 determines whether the CoA is duplicated with a CoA used by another terminal. If it is determined that the CoA is available, the neighbor network 104 transmits a CoA authentication message HAck to the serving network 102 in operation 121. If it is determined that the CoA is unavailable, the neighbor network 104 generates a new CoA and transmits HAck containing the new CoA to the serving network 102 in operation 121.

In this case, the neighbor network 104 generates a tunnel with the serving network 102 based on the CoA.

The serving network 102 receives the message HAck from the neighbor network 104 and transmits a message Fback containing information on HAck to the terminal 100 in operation 123. The serving network 102 forwards data to be transmitted to the terminal 100 to the neighbor network 104 through the tunnel in operation 125.

When the terminal 100 receives the message Fback, the terminal 100 performs an L2 handover in operation 127.

The terminal 100 transmits a fast neighbor advertisement (FNA) message to the neighbor network 104 in order to perform an L3 handover in operation 129.

When the neighbor network 104 receives the FNA message, the neighbor network 104 transmits the data, which was received from the serving network 102 and temporarily stored, to the terminal 100 in operation 131.

As described above, FMIPv6 cannot operate independently but operate based on neighbor network search technology and a trigger generated by a specific lower layer.

Recently, in order to integrate different networks, a media independent handover (MIH) technology has been suggested by the IEEE 802.21 work group (WG). The MIH technology provides transparent mobility in a higher layer regardless of wireless access technologies (for example, 3G, WLAN, and WMAN) in a lower layer. The MIH technology provides three services. First, the MIH technology provides an event service in which an event occurring in a lower layer is transferred to a higher layer. Second, the MIH technology provides a command service in which a higher layer commands a lower layer. Third, the MIH technology provides an information service in which information on neighbor networks is provided to a terminal.

As described above, the MIH technology of the wireless communication system provides the neighbor network search technology and information on a lower layer by means of the event service, the command service, and the information service in order to integrate different networks. Thus, the mobility management protocol of the wireless communication system can operate based on the MIH technology. In this case, the wireless communication system needs a method for operating the mobility management protocol based on the MIH technology.

Internet draft-petander-mipshop-fmipv6-bbsd-00 discloses a method of performing vertical handover based on FMIPv6 in which the serving network, after having received handover information from the terminal, performs bicatsing of data to the terminal and to the target network until the actual handover takes place between the terminal and the target network.

### SUMMARY OF THE INVENTION

The present invention provides an apparatus and method for operating a mobility management protocol based on media independent handover (MIH) in a wireless communication system.

The present invention also provides an apparatus and method for reducing an overhead according to signal transmission when a mobility management protocol operates based on MIH in a wireless communication system.

The present invention also provides an apparatus and method for preventing a handover performance drop due to unexpected movement of a terminal when a mobility management protocol operates based on MIH in a wireless communication system.

According to an aspect of the present invention, there is provided a method of performing a vertical handover in a terminal of a wireless communication system as defined in claim 1.

According to another aspect of the present invention, there is provided a method of performing a vertical handover in a serving network of a wireless communication system as defined in claim 9.

According to another aspect of the present invention, there is provided a method of performing a vertical handover in a target network of a wireless communication system as defined in claim 20.

### BRIEF DESCRIPTION OF THE DRAWINGS

The above and other features and advantages of the present invention will become more apparent by describing in detail exemplary embodiments thereof with reference to the attached drawings in which:
FIG. 1 is a signaling diagram for performing a handover in a conventional wireless communication system;
FIG. 2 is a configuration of a wireless communication system for performing a vertical handover according to an embodiment of the present invention;
FIG. 3 is a block diagram of a terminal in a wireless communication system according to an embodiment of the present invention;
FIG. 4 is a signaling diagram for performing a media independent handover (MIH)-based vertical handover in a wireless communication system according to an embodiment of the present invention; and
FIG. 5 is a signaling diagram for performing an MIH-based vertical handover in a wireless communication system according to another embodiment of the present invention.

### DETAILED DESCRIPTION OF THE INVENTION

Hereinafter, the present invention will be described in detail by explaining preferred embodiments of the invention with reference to the attached drawings. In the following description, well-known functions or constructions are not described in detail since they would obscure the invention with unnecessary detail.

The present invention will be described on technology for performing a vertical handover by using a mobility management protocol based on a media independent handover (MIH) in a wireless communication system. The mobility management protocol includes mobile Internet protocol version 6 (MIPv6) and fast handover MIPv6 (FMIPv6), and will be described as FMIPv6. In this case, MIPv6 may operate as well as FMIPv6.

It is assumed that a wireless local area network (WLAN) of the Institute of Electrical and Electronics Engineers (IEEE) 802.11 group and a wireless metropolitan area network (WMAN) of the IEEE 802.16 group coexist in the wireless communication system. However, if other different networks coexist in the wireless communication system, the present invention can be applied to the different networks.

In addition, it is assumed that a terminal determines the vertical handover in the wireless communication system.

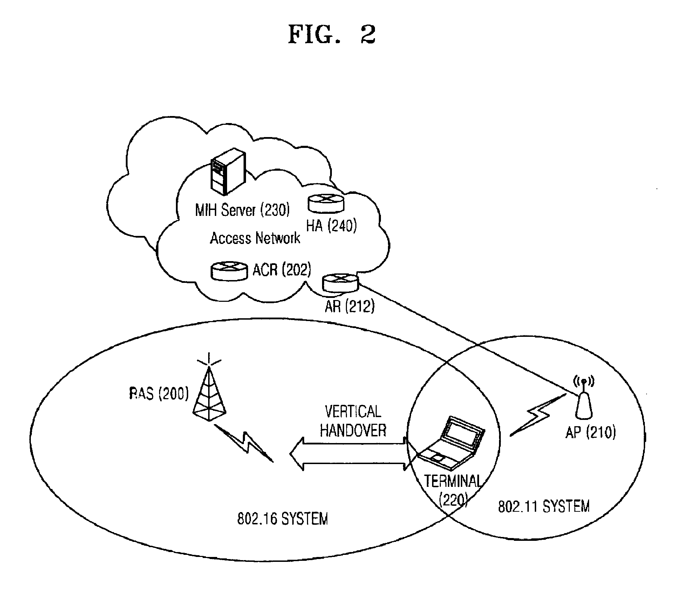

FIG. 2 is a configuration of a wireless communication system for performing a vertical handover according to an embodiment of the present invention.

As illustrated in FIG. 2, a WLAN and a WMAN coexist in the wireless communication system. The WMAN includes a radio access station (RAS) 200 providing wireless access technology of the WMAN to a user and an access control router (ACR) 202 performing mobility of the user and Internet protocol (IP) routing with an external network through the RAS 200. The WLAN includes an access point (AP) 210 providing access technology of the WLAN to the user and an access router (AR) 212 connecting the user to the Internet in an upper layer through the AP 210.

The wireless communication system provides information on the WLAN and the WMAN to the user by using an MIH server 230 on the Internet. That is, the MIH server 230 performs a media independent information service. In addition, the wireless communication system stores location information of the user by using a home agent (HA) 240.

In the wireless communication system, a terminal 220 having interfaces with the WLAN and the WMAN uses a WLAN service through the AP 210. If the terminal 220 moves from a WLAN service area to a WMAN service area, the terminal 220 can perform the vertical handover by acquiring information on the WMAN from the MIH server 230.

In addition, the terminal 220 using the WMAN service in the wireless communication system may perform the vertical handover to the WLAN.

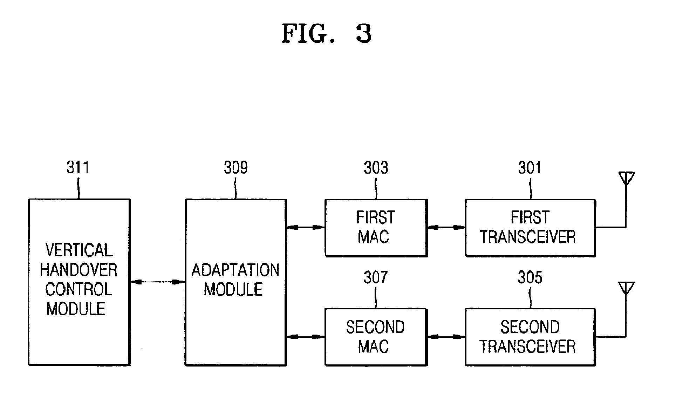

As described above, when the vertical handover is performed based on MIH in the wireless communication system, the terminal 220 is configured as illustrated in FIG. 3.

FIG. 3 is a block diagram of a terminal in a wireless communication system according to an embodiment of the present invention.

As illustrated in FIG. 3, the terminal includes a first transceiver 301, a first media access control (MAC) 303, a second transceiver 305, a second MAC 307, an adaptation module 309, and a vertical handover control module 311.

The first transceiver 301 transmits and receives a signal to and from a WLAN via an antenna. The first MAC 303 processes the signal provided by the first transceiver 301. In this case, the first MAC 303 performs a vertical handover by using a message obtained by combining a signal for MIH technology and a signal for the mobility management protocol in order to reduce an overhead of the signal for the MIH technology and the signal for the mobility management protocol.

The second transceiver 305 transmits and receives a signal to and from a WMAN via an antenna. The second MAC 307 processes the signal provided by the second transceiver 305. In this case, the second MAC 307 performs a vertical handover by using a message obtained by combining the signal for the MIH technology and the signal for the mobility management protocol in order to reduce an overhead of the signal for the MIH technology and the signal for the mobility management protocol.

The adaptation module 309 transforms signals defined according to respective networks, which have received from the first and second MACs 303 and 307, and transmits the transformed signals to the vertical handover control module 311 so that the vertical handover control module 311 can process the signals regardless of a network type. In addition, the adaptation module 309 transforms a signal received from the vertical handover control module 311 to a signal of a format corresponding to each network and transmits the transformed signal to the first or second MACs 303 or 307. The adaptation module 309 denotes an MIH function unit performing an MIH function.

The vertical handover control module 311 controls the vertical handover of the terminal according to a signal provided by the adaptation module 309. That is, the vertical handover control module 311 controls the vertical handover of the terminal by using neighbor network information and events received from the adaptation module 309.

Hereinafter, procedures for performing a vertical handover by performing FMIPv6 based on the MIH technology in the wireless communication system will be described. Although it is assumed that a terminal performs the vertical handover from a WMAN to a WLAN, the present invention can be applied to a case in which the terminal performs the vertical handover from the WLAN to the WMAN.

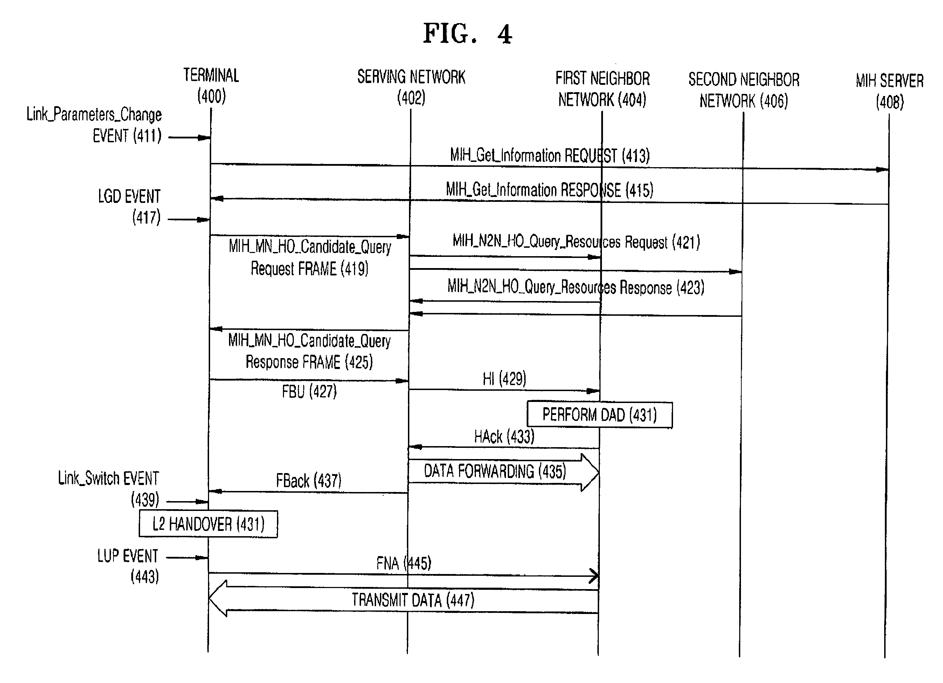

FIG. 4 is a signaling diagram for performing an MIH-based vertical handover in a wireless communication system according to an embodiment of the present invention. In FIG. 4, a serving network 402 denotes an access control router (ACR), and neighbor networks 404 and 406 denote access routers (ARs).

Referring to FIG. 4, when a Link_Parameters_Change event defined in the MIH technology occurs in operation 411, a terminal 400 of the wireless communication system determines that the vertical handover must be performed. In operation 413, the terminal 400 transmits a neighbor network information request message MIH_Get_lnformation REQUEST to an MIH server 408.

When the MIH server 408 receives MIH_Get_Information REQUEST, the MIH server 408 transmits a neighbor network information response message MIH_Get_Information RESPONSE containing neighbor network information to the terminal 400 in operation 415.

The terminal 400 confirms the neighbor network information from MIH_Get_Information RESPONSE received from the MIH server 408.

If a Link_Going_Down (LGD) event defined in the MIH technology occurs in operation 417, the terminal 400 selects candidate networks 404 and 406 for performing the vertical handover from among neighbor networks in order to perform the vertical handover. In operation 419, the terminal 400 transmits a handover candidate information request message MIH_MN_HO_Candidate_Query Request FRAME containing resource information, which the terminal 400 requests the candidate networks 404 and 406 for when the vertical handover is performed, to the serving network 402.

The serving network 402 confirms the candidate networks 404 and 406 to which the terminal 400 performs the vertical handover and resource information requested by the terminal 400, which are contained in MIH_MN_HO_Candidate_Query Request FRAME received from the terminal 400. In operation 421, the serving network 402 transmits a handover support request message MIH_N2N_HO_Query_Resources Request to the candidate networks 404 and 406 in order to determine whether resources requested by the terminal 400 can be supported.

When MIH_N2N_HO_Query_Resources Request is received, a first neighbor network 404 and a second neighbor network 406 that are the candidate networks determine whether the vertical handover of the terminal 400 can be supported. That is, the first neighbor network 404 and the second neighbor network 406 determine whether the resources requested by the terminal 400 can be assigned to the terminal 400.

In operation 423, the first neighbor network 404 and the second neighbor network 406 transmit a handover support response message MIH_N2N_HO_Query_Resources Response containing handover support information of the terminal 400 to the serving network 402.

In operation 425, the serving network 402 transmits the terminal handover support information of the candidate networks 404 and 406 confirmed from MIH_N2N_HO Query_Resources Response to the terminal 400 by means of a handover candidate information response message MIH_MN_HO_Candidate_Query Response FRAME.

The terminal 400 determines a network for performing the vertical handover by confirming the handover support information of the candidate networks 404 and 406 from MIH_MN_HO_Candidate_Query Response FRAME. In this case, it is assumed that the terminal 400 determines the first neighbor network 404 as the network for performing the vertical handover.

In operation 427, the terminal 400 generates a care-of-address (CoA) of the first neighbor network 404 and transmits a fast binding update (FBU) message containing the CoA to the serving network 402. In this case, the terminal 400 generates the CoA based on subnet prefix information of the first neighbor network 404, which has received from the MIH server 408.

In operation 429, the serving network 402 inserts the CoA confirmed from the FBU message into a handover initiate (HI) message and transmits the HI message to the first neighbor network 404.

The first neighbor network 404 confirms the CoA from the HI message. In operation 431, the first neighbor network 404 determines by performing duplicate address detection (DAD) whether the CoA is available. That is, the first neighbor network 404 determines whether the CoA is duplicated with any CoA used by other terminals. If it is determined that the CoA is available, the first neighbor network 404 transmits a CoA authentication message HAck to the serving network 402 in operation 433. If it is determined that the CoA is unavailable, the first neighbor network 404 generates a new CoA and transmits HAck containing the new CoA to the serving network 402 in operation 433.

In this case, the first neighbor network 404 generates a tunnel with the serving network 402 based on the CoA and performs a preparation for temporarily storing data to be received through the tunnel.

When HAck is received from the first neighbor network 404, the serving network 402 forwards data to be transmitted to the terminal 400 to the first neighbor network 404 through the tunnel with the first neighbor network 404 in operation 435.

In operation 437, the serving network 402 transmits an FBack message containing information on HAck to the terminal 400.

After the terminal 400 receives the FBack message from the serving network 402, if a Link_Switch event defined in the MIH technology occurs in operation 439, the terminal 400 performs an L2 handover in operation 441.

If a Link_Up (LUP) event defined in the MIH technology occurs in operation 443, the terminal 400 transmits a fast neighbor advertisement (FNA) message to the first neighbor network 404 in operation 445 in order to perform an L3 handover.

When the FNA message is received, the first neighbor network 404 transmits the data received through the tunnel and temporarily stored to the terminal 400 in operation 447.

That is, the wireless communication system has completed the vertical handover of the terminal 400.

As described above, when FMIPv6 is performed based on the MIH technology in the wireless communication system, an overhead increases due to a signal for the MIH technology and a signal for FMIPv6. In addition, when the terminal unexpectedly moves to another network instead of the first neighbor network 404, handover performance decreases due to a packet loss.

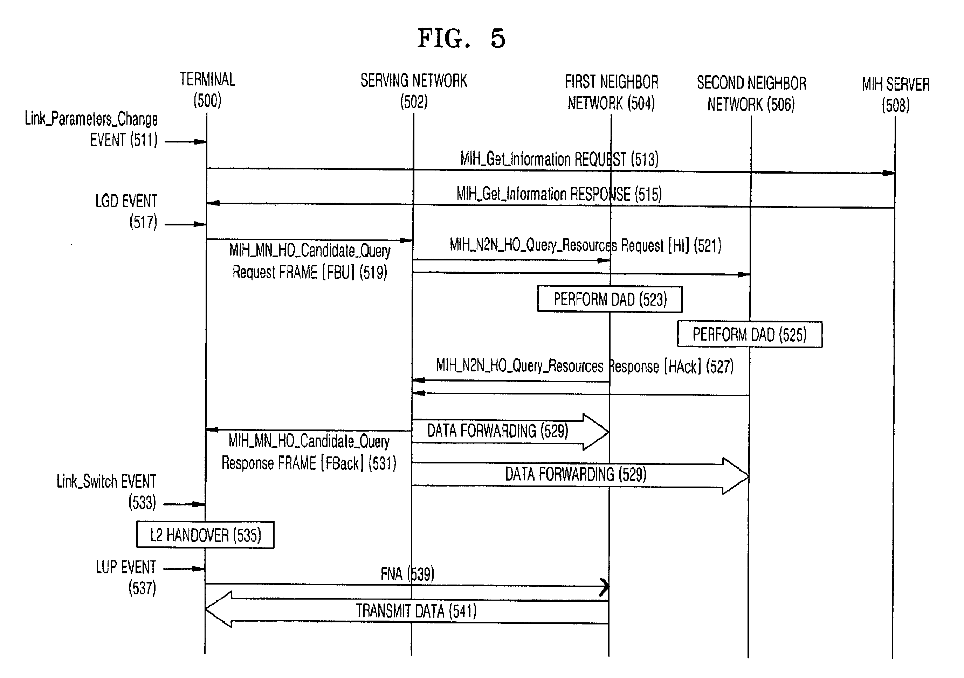

Thus, the wireless communication system performs FMIPv6 based on the MIH technology as illustrated in FIG. 5 in order to prevent the overhead and a decrease of handover performance due to a packet loss.

FIG. 5 is a signaling diagram for performing an MIH-based vertical handover in a wireless communication system according to another embodiment of the present invention. In FIG. 5, a serving network 502 denotes an ACR, and neighbor networks 504 and 506 denote ARs.

Referring to FIG. 5, when a Link_Parameters_Change event defined in the MIH technology occurs in operation 511, a terminal 500 of the wireless communication system determines that the vertical handover must be performed. In operation 513, the terminal 500 transmits a neighbor network information request message MIH_Get_Information REQUEST to an MIH server 508.

When the MIH server 508 receives MIH_Get_lnformation REQUEST, the MIH server 508 transmits a neighbor network information response message MIH_Get_Information RESPONSE containing neighbor network information to the terminal 500 in operation 515.

The terminal 500 acquires subnet prefix information of neighbor networks from MIH_Get_Information RESPONSE received from the MIH server 508.

If a Link_Going_Down (LGD) event defined in the MIH technology occurs in operation 517, the terminal 500 selects candidate networks 504 and 506 for performing the vertical handover from among neighbor networks in order to perform the vertical handover. In addition, the terminal 500 generates CoAs of the candidate networks 504 and 506. In this case, the terminal 500 generates the CoAs based on subnet prefixes of the candidate networks 504 and 506, which have received from the MIH server 508.

In operation 519, the terminal 500 transmits a handover candidate information request integration message MIH_MN_HO_Candidate_Query Request FRAME [FBU] containing resource information, which the terminal 500 requests the candidate networks 504 and 506 for when the vertical handover is performed, and the CoAs to the serving network 502. MIH_MN_HO_Candidate_Query Request FRAME [FBU] is formed as illustrated in Table 1.

**[Table 1]**

| |
|---|
| MIH_MN_HO_Candidate_Query Request FRAME |
| Mobility Header |
| Alternate CoA option(NCoA1) |
| Alternate CoA option(NCoA2) |
| . |
| . |
| . |

As illustrated in Table 1, MIH_MN_HO_Candidate_Query Request FRAME [FBU] further includes a mobility header and several alternate CoA options for FBU of FMIPv6 in the last of a data part of MIH_MN_HO_Candidate_Query Request FRAME containing candidate network information, which is defined in the MIH technology.

The serving network 502 confirms information on the candidate networks 504 and 506 to which the terminal 500 performs the vertical handover, CoA information, and resource information requested by the terminal 500 in the vertical handover from MIH_MN_HO_Candidate_Query Request FRAME [FBU] received from the terminal 500.

In operation 521, the serving network 502 transmits a handover support request integration message MIH_N2N_HO Query_Resources Request [HI] to the candidate networks 504 and 506 in order to determine whether resources requested by the terminal 500 can be supported. In this case, MIH_N2N_HO_Query_Resources Request [HI] is formed by including CoAs of the candidate networks 504 and 506 as illustrated in Table 2.

**[Table 2]**

| |
|---|
| MIH_N2N_HO_Query_Resources Request |
| ICMP header |
| MAC address of terminal |
| PCoA |
| NCoA |

As illustrated in Table 2, MIH_N2N_HO_Query_Resources Request [HI] further includes Internet control message protocol (ICMP) header information for HI of FMIPv6, a previous CoA (PCoA) that the terminal 500 has used with the serving network 502, and a new CoA (NCoA) newly generated for the candidate network 504 or 506 in last of a data part of MIH_N2N_HO_Query_Resources Request defined in the MIH technology.

When MIH_N2N_HO_Query_Resources Request [HI] is received, a first neighbor network 504 and a second neighbor network 506 that are the candidate networks determine whether the vertical handover of the terminal 500 can be supported. That is, the first neighbor network 504 and the second neighbor network 506 determine whether the resources requested by the terminal 500 can be assigned to the terminal 500. In operations 523 and 525, the candidate networks 504 and 506 determine by performing DAD whether the CoA is available. That is, the first neighbor network 504 and the second neighbor network 506 determine whether the CoA is duplicated with any CoA used by other terminals.

In operation 527, the candidate networks 504 and 506 transmit a handover support response integration message MIH_N2N_HO Query_Resources Response [HAck] containing handover support information of the terminal 500 and DAD result information to the serving network 502. In this case, MIH_N2N_HO_Query_Resources Response [HAck] includes CoA authentication information if the CoA is available. If the CoA is unavailable, MIH_N2N_HO_Query_Resources Response [HAck] includes a CoA newly generated by the first neighbor network 504 or the second neighbor network 506. MIH_N2N_HO_Query_Resources Response [HAck] is formed as illustrated in Table 3.

**[Table 3]**

| |
|---|
| MIH_N2N_HO_Query_Resources Response |
| ICMP header |
| NCoA |

As illustrated in Table 3, MIH_N2N_HO_Query_Resources Response [HAck] further includes ICMP header information for a FAck message of FMIPv6 and an NCoA of the candidate network in the last of a data part of MIH_N2N_HO_Query_Resources Response.

In this case, the candidate networks 504 and 506 generate a tunnel with the serving network 502 based on the respective CoAs after transmitting MIH_N2N_HO_Query_Resources Response [HAck]. The candidate networks 504 and 506 perform a preparation for temporarily storing data to be received through the tunnel.

When MIH_N2N_HO_Query_Resources Response [HAck] is received from the candidate networks 504 and 506, the serving network 502 forwards data to be transmitted to the terminal 500 to the candidate networks 504 and 506 by enabling the tunnel with the candidate networks 504 and 506 in operation 529. That is, if the plurality of candidate networks 504 and 506 exist, since the serving network 502 does not know a target network to which the terminal 500 performs the vertical handover, the serving network 502 forwards the data by enabling the tunnel with the candidate networks 504 and 506. In this case, the candidate networks 504 and 506, which have received the data from the serving network 502 through the tunnel, temporarily store the data. Candidate networks excluding the target network to which the terminal 500 performs the vertical handover from among the candidate networks 504 and 506 disable the tunnel and discard the temporarily stored data after a predetermined time elapses.

In operation 531, the serving network 502 transmits a handover candidate information response integration message MIH_MN_HO_Candidate_Query Response FRAME [FBack] containing the handover support information of the candidate networks 504 and 506 and CoA information confirmed from MIH_N2N_HO_Query_Resources Response [HAck] to the terminal 500. MIH_MN_HO_Candidate_Query Response FRAME [FBack] is formed as illustrated in Table 4.

**[Table 4]**

| |
|---|
| MIH_MN_HO_Candidate_Query Response FRAME |
| Mobility Header |
| Alternate CoA option |

As illustrated in Table 4, MIH_MN_HO_Candidate_Query Response FRAME [FBack] further includes a mobility header for an FBack message of FMIPv6 and an NCoA of the candidate network in the last of a data part of MIH_MN_HO_Candidate_Query Response FRAME.

The terminal 500 determines a network for performing the vertical handover by confirming the handover support information of the candidate networks 504 and 506 from MIH_MN_HO_Candidate_Query Response FRAME [FBack]. In this case, it is assumed that the terminal 500 determines the first neighbor network 504 as the network for performing the vertical handover.

If a Link_Switch event defined in the MIH technology occurs in operation 533, the terminal 500 performs an L2 handover in operation 535.

If a Link_Up (LUP) event defined in the MIH technology occurs in operation 537, the terminal 500 transmits an FNA message to the first neighbor network 504 in operation 539 in order to perform an L3 handover.

When the FNA message is received, the first neighbor network 504 transmits the data received through the tunnel and temporarily stored to the terminal 500 in operation 541.

The serving network 502 of the wireless communication system forwards data through tunneling to the candidate networks 504 and 506 to which the terminal can perform the vertical handover. Thus, even if the terminal 500 performs the vertical handover to the second neighbor network 506 due to unexpected movement after determining the first neighbor network 504 as the target network for performing the vertical handover, the terminal 500 can perform the vertical handover without any packet loss.

As described above, according to the present invention, when a vertical handover is performed by using a mobility management protocol based on MIH in a wireless communication system, by integrating and using a signal for the MIH technology and a signal for the mobility management protocol, an overhead of the signal for the MIH technology and the signal for the mobility management protocol can be reduced, and a decrease of handover performance due to unexpected movement of a terminal can be prevented.

In an embodiment of the present invention, the wireless communication system integrates and uses a signal for the MIH technology and a signal for FMIPv6 in order to reduce an overhead of the signal for the MIH technology and the signal for FMIPv6. In this case, the wireless communication system integrates the signal for the MIH technology and the signal for FMIPv6 by adding only a data portion excluding an IP header from the signal for FMIPv6 to the last of the signal for the MIH technology as illustrated in FIG. 5. Alternatively, the wireless communication system may add the data portion excluding the IP header from the signal for FMIPv6 to another portion of the signal for the MIH technology instead of the last of the signal for the MIH technology.

In another embodiment of the present invention, the wireless communication system may encapsulate the signal for FMIPv6 in the signal for the MIH technology.

While the present invention has been particularly shown and described with reference to exemplary embodiments thereof, it will be understood by one of ordinary skill in the art that various changes in form and details may be made therein without departing from the scope of the present invention as defined by the following claims.

## Claims

1. A method of performing a vertical handover in a terminal (500) of a wireless communication system, the method being **characterized by**:
generating a plurality of care-of-addresses, hereinafter referred to as CoAs, by using candidate neighbor networks (504, 506) information acquired from a media independent handover server (508), hereinafter referred to as MIH server, to perform a vertical handover;
generating a first message for a mobility management protocol containing handover request information for MIH technology and the CoAs ;
transmitting the first message to a serving network (502);
receiving handover support information and CoA uniqueness information of the candidate neighbor networks (504, 506), from the serving network (502); and
determining a target network (504) selected among the candidate neighbor networks (504, 506) for performing the vertical handover by using the handover support information, and performing the vertical handover to the target network by using the CoA uniqueness information.

2. The method of claim 1, wherein the generating of the CoAs comprises:
acquiring subnet prefix information of the candidate neighbor networks (504, 506) from the MIH server (508); and
generating the CoA of each neighbor network by using the subnet prefix information of the candidate neighbor networks (504, 506).

3. The method of claim 1, wherein the generating of the CoAs comprises:
selecting the candidate neighbor networks (504, 506) for performing the vertical handover from among the neighbor networks; and
generating the CoA of each candidate neighbor network by using information on the candidate neighbor networks (504, 506).

4. The method of claim 1, wherein the handover request information comprises information on the candidate neighbor networks (504, 506) for performing the vertical handover and resource information requested to the candidate neighbor networks (504, 506) in the vertical handover.

5. The method of claim 1, wherein the first message is generated by encapsulating the CoAs in the handover request information.

6. The method of claim 1, wherein the first message is generated by adding a mobility header and at least one alternate CoA option to the handover request information.

7. The method of claim 1, wherein the mobility management protocol comprises mobile Internet protocol version 6, MIPv6, and fast handover MIPv6, FMIPv6.

8. The method of claim 1, wherein the receiving of the handover support information and the CoA uniqueness information comprises:
determining whether a second message is received from the serving network (502); and
if the second message is received, confirming the terminal handover support and CoA uniqueness of the candidate neighbor networks (504, 506) from the second message.

9. A method of performing a vertical handover in a serving network (502) of a wireless communication system, the method being **characterized by**:
receiving handover request information and a plurality of care-of-addresses, CoAs, of candidate neighbor networks (504, 506), from a terminal (500);
generating a second message for a mobility management protocol containing handover request information of the terminal (500) for media independent handover, MIH, technology and CoAs;
transmitting the second message to the respective candidate neighbor networks (504, 506);
receiving handover support information and CoAs uniqueness information for the terminal (500), which are received from the candidate neighbor networks (504, 506); and
transmitting the handover support information and CoAs uniqueness information to the terminal (500).

10. The method of claim 9, wherein the receiving of the handover support information and the CoAs of candidate neighbor networks comprises:
determining whether a first message is received from the terminal (500); and
if the first message is received, confirming handover request information of the terminal (500) and a CoAs from the first message.

11. The method of claim 10, wherein the handover request information contains resource information for which the terminal (500) requests the candidate neighbor networks (504, 506) in the vertical handover.

12. The method of claim 10, wherein the second message is generated by encapsulating the CoAs in the handover request information of the terminal (500).

13. The method of claim 10, wherein the second message is generated by adding Internet control message protocol, ICMP, header information, a CoA that the terminal (500) uses with the serving network (502), and CoAs generated by the terminal (500) for the candidate networks (504, 506) to the handover request information of the terminal (500).

14. The method of claim 10, wherein the mobility management protocol comprises mobile Internet protocol version 6, MIPv6, and fast handover MIPv6, FMIPv6.

15. The method of claim 9, wherein the receiving of the handover support information and the CoAs uniqueness comprises:
determining whether a third message is received from the candidate neighbor networks (504, 506); and
if the third message is received, confirming the terminal handover support and CoAs uniqueness of the candidate neighbor networks (504, 506) from the third message.

16. The method of claim 9, further comprising:
if the candidate neighbor networks (504, 506) support the vertical handover of the terminal (500), enabling tunnels with the candidate neighbor networks (504, 506); and
forwarding data to be transmitted to the terminal (500) through the tunnels.

17. The method of claim 9, wherein the transmitting of the handover support information and the CoAs uniqueness information to the terminal (500) comprises:
generating a fourth message for a mobility management protocol containing terminal (500) handover support information of the candidate neighbor networks (504, 506) for MIH technology and CoAs ; and
transmitting the fourth message to the terminal (500).

18. The method of claim 17, wherein the fourth message is generated by encapsulating the CoAs information in the handover support information of the terminal (500).

19. The method of claim 17, wherein the fourth message is generated by adding a mobility header and CoAs of the candidate networks (504, 506) to the handover support information of the terminal (500).

20. A method of performing a vertical handover in a target network (504) of a wireless communication system, the method being **characterized by**:
receiving handover request information of a terminal (500) and a care-of-address, CoA, which are received from a serving network (502) providing a service to the terminal (500);
determining whether the vertical handover of the terminal (500) is supported;
checking the uniqueness of the CoA; and
transmitting information indicating whether the vertical handover of the terminal (500) is supported and the CoA uniqueness check information to the serving network, wherein the transmitting information comprises generating a second message for a mobility management protocol containing handover support information of the terminal (500) for media independent handover, MIH, technology and CoA information and transmitting the second message to the serving network (502).

21. The method of claim 20, wherein the receiving of the handover request information of the terminal (500) and the CoA comprises:
determining whether a first message is received from the serving network (502); and
if the first message is received, confirming the terminal handover request information and the CoA from the first message.

22. The method of claim 20, wherein the determining comprises:
confirming resource information requested when the vertical handover of the terminal (500) is performed; and
determining whether the requested resources are assigned to the terminal (500).

23. The method of claim 20, further comprising:
generating a tunnel with the serving network (502) when the vertical handover of the terminal (500) is supported; and
storing data to be transmitted to the terminal (500), which is provided by the serving network (502) through the tunnel.

24. The method of claim 20, wherein the CoA uniqueness check information contains CoA authentication information if the CoA is unique, and contains a newly generated CoA if the CoA is not unique.

25. The method of claim 22, wherein the second message is generated by encapsulating the CoA information in the handover support information of the terminal (500).

26. The method of claim 22, wherein the second message is generated by adding Internet control message protocol, ICMP, header information and the CoA information to the handover support information of the terminal (500).

27. The method of claim 22, wherein the mobility management protocol comprises mobile Internet protocol version 6, MIPv6, and fast handover MIPv6, FMIPv6.

## Patentansprüche

1. Verfahren zum Durchführen einer vertikalen Übergabe in einem Endgerät (500) eines drahtlosen Kommunikationssystems, wobei das Verfahren **gekennzeichnet ist durch**:
Erzeugen einer Mehrzahl von Care-Of-Adressen, nachfolgend als CoAs bezeichnet, mittels Information hinsichtlich Kandidaten-Nachbarnetzwerke (504, 506), welche von einem medienunabhängigen Übergabeserver (508), nachfolgend als MIH-Server bezeichnet, erlangt wird, um eine vertikale Übergabe durchzuführen;
Erzeugen einer ersten Nachricht für ein Mobilitätsmanagementprotokoll, welche Übergabeanfrageinformation für MIH-Technologie und die CoAs enthält;
Übertragen der ersten Nachricht an ein bedienendes Netzwerk (502);
Empfangen von Übergabeunterstützungsinformation und CoA-Eindeutigkeitsinformation von den Kandidaten-Nachbarnetzwerken (504, 506) von dem bedienenden Netzwerk (502); und
Bestimmen eines Zielnetzwerkes (504), welches aus den Kandidaten-Nachbarnetzwerken (504, 506) ausgewählt wird, zum Durchführen der vertikalen Übergabe mittels der Übergabeunterstützungsinformation und Durchführen der vertikalen Übergabe zu dem Zielnetzwerk mittels der CoA-Eindeutigkeitsinformation.

2. Verfahren nach Anspruch 1, wobei das Erzeugen der CoAs umfasst:
Erlangen von Subnetzpräfixinformation der Kandidaten-Nachbarnetzwerke (504, 506) von dem MIH-Server (508); und
Erzeugen der CoA von jedem Nachbarnetzwerk mittels der Subnetzpräfixinformation des Kandidaten-Nachbarnetzwerks (504, 506).

3. Verfahren nach Anspruch 1, wobei das Erzeugen der CoAs umfasst:
Auswählen der Kandidaten-Nachbarnetzwerke (504, 506) zum Durchführen der vertikalen Übergabe aus den Nachbarnetzwerken; und
Erzeugen der CoA von jedem Kandidaten-Nachbarnetzwerk mittels Information der Kandidaten-Nachbarnetzwerke (504, 506).

4. Verfahren nach Anspruch 1, wobei die Übergabeanfrageinformation Information der Kandidaten-Nachbarnetzwerke (504, 506) zum Durchführen der vertikalen Übergabe und an die Kandidaten-Nachbarnetzwerke (504, 506) in der vertikalen Übergabe angefragte Ressourceninformation umfasst.

5. Verfahren nach Anspruch 1, wobei die erste Nachricht durch Kapseln der CoAs in der Übergabeanfrageinformation erzeugt wird.

6. Verfahren nach Anspruch 1, wobei die erste Nachricht durch Hinzufügen eines Mobilitätsheaders und wenigstens einer alternativen CoA-Option zur Übergabeanfrageinformation erzeugt wird.

7. Verfahren nach Anspruch 1, wobei das Mobilitätsmanagementprotokoll Mobile Internet Protocol Version 6, MlPv6, und Schnellübergabe in MIPv6, FMIPv6, umfasst.

8. Verfahren nach Anspruch 1, wobei das Empfangen der Übergabeunterstützungsinformation und der CoA-Eindeutigkeitsinformation umfasst:
Bestimmen, ob eine zweite Nachricht von dem bedienenden Netzwerk (502) empfangen wird; und,
falls die zweite Nachricht empfangen wird, Bestätigen der Endgeräteübergabeunterstützung und der CoA-Eindeutigkeit der Kandidaten-Nachbarnetzwerke (504, 506) von der zweiten Nachricht.

9. Verfahren zum Durchführen einer vertikalen Übergabe in einem bedienenden Netzwerk (502) eines drahtlosen Kommunikationssystems, wobei das Verfahren **gekennzeichnet ist durch**:
Empfangen einer Übergabeanfrageinformation und einer Mehrzahl von Care-Of-Adressen, CoAs, von Kandidaten-Nachbarnetzwerken (504, 506) von einem Endgerät (500);
Erzeugen einer zweiten Nachricht für ein Mobilitätsmanagementprotokoll, welche Übergabeanfrageinformation des Endgeräts (500) für eine medienunabhängige Übergabe, MIH, -Technologie und die CoAs enthält;
Übertragen der zweiten Nachricht an die entsprechenden Kandidaten-Nachbarnetzwerke (504, 506);
Empfangen von Übergabeunterstützungsinformation und CoAs-Eindeutigkeitsinformation für das Endgerät (500), welche von den Kandidaten-Nachbarnetzwerken (504, 506) empfangen werden; und
Übertragen der Übergabeunterstützungsinformation und der CoAs-Eindeutigkeitsinformation an das Endgerät (500).

10. Verfahren nach Anspruch 9, wobei das Empfangen der Übergabeunterstützungsinformation und der CoAs von Kandidaten-Nachbarnetzwerken umfasst;
Bestimmen, ob eine erste Nachricht von dem Endgerät (500) empfangen wird; und,
falls die erste Nachricht empfangen wird, Bestätigen der Übergabeanfrageinformation des Endgeräts (500) und einer CoA von der ersten Nachricht.

11. Verfahren nach Anspruch 10, wobei die Übergabeanfrageinformation Ressourceninformation enthält, welche das Endgerät (500) bei den Kandidaten-Nachbarnetzwerken (504, 506) in der vertikalen Übergabe anfragt.

12. Verfahren nach Anspruch 10, wobei die zweite Nachricht durch Kapseln der CoAs in der Übergabeanfrageinformation des Endgeräts (500) erzeugt wird.

13. Verfahren nach Anspruch 10, wobei die zweite Nachricht durch Hinzufügen von Internet Control Message Protocol, ICMP, -Headerinformation, einer CoA, welche das Endgerät (500) mit dem bedienenden Netzwerk (502) verwendet, und CoAs, welche durch das Endgerät (500) für die Kandidatenetzwerke (504, 506) erzeugt wurden, zu der Übergabeanfrageinformation des Endgeräts (500) erzeugt wird.

14. Verfahren nach Anspruch 10, wobei das Mobilitätsmanagementprotokoll Mobile Internet Protocol Version 6, MIPv6, und Schnellübergabe in MIPv6, FMIPv6, umfasst.

15. Verfahren nach Anspruch 9, wobei das Empfangen der Übergabeunterstützungsinformation und der CoAs-Eindeutigkeit umfasst:
Bestimmen, ob eine dritte Nachricht von den Kandidaten-Nachbarnetzwerken (504, 506) empfangen wird; und,
falls die dritte Nachricht empfangen wird, Bestätigen der Endgeräteübergabeunterstützung und der CoAs-Eindeutigkeit der Kandidaten-Nachbarnetzwerke (504, 506) von der dritten Nachricht.

16. Verfahren nach Anspruch 9, ferner umfassend:
falls die Kandidaten-Nachbarnetzwerke (504, 506) die vertikale Übergabe des Endgeräts (500) unterstützen, Freigeben von Tunneln mit den Kandidaten-Nachbarnetzwerken (504, 506); und
Weiterleiten von an das Endgerät (500) zu übertragenden Daten durch die Tunnel.

17. Verfahren nach Anspruch 9, wobei das Übertragen der Übergabeunterstützungsinformation und der CoAs-Eindeutigkeitsinformation an das Endgerät (500) umfasst:
Erzeugen einer vierten Nachricht für ein Mobilitätsmanagementprotokoll, welche Endgerät (500)-Übergabeunterstützungsinformation der Kandidaten-Nachbarnetzwerke (504, 506) für die MIH-Technologie und CoAs enthält; und
Übertragen der vierten Nachricht an das Endgerät (500).

18. Verfahren nach Anspruch 17, wobei die vierte Nachricht durch Kapseln der CoAs-Information in der Übergabeunterstützungsinformation des Endgeräts (500) erzeugt wird.

19. Verfahren nach Anspruch 17, wobei die vierte Nachricht durch Hinzufügen eines Mobilitätsheaders und CoAs der Kandidatennetzwerke (504, 506) zur Übergabeunterstützungsinformation des Endgeräts (500) erzeugt wird.

20. Verfahren zum Durchführen einer vertikalen Übergabe in einem Zielnetzwerk (504) eines drahtlosen Kommunikationssystems, wobei das Verfahren **gekennzeichnet ist durch**:
Empfangen von Übergabeanfrageinformation eines Endgeräts (500) und einer Care-of-Adresse, CoA, welche von einem bedienenden Netzwerk (502) empfangen werden, das dem Endgerät (500) einen Dienst bereitstellt; und
Bestimmen, ob die vertikale Übergabe des Endgeräts (500) unterstützt wird;
Überprüfen der Eindeutigkeit der CoA; und
Übertragen von Information, welche angibt, ob die vertikale Übergabe des Endgeräts (500) unterstützt wird, und der CoA-Eindeutigkeitsüberprüfungsinformation an das bedienende Netzwerk, wobei das Übertragen von Information Erzeugen einer zweiten Nachricht für ein Mobilitätsmanagementprotokoll, welche Übergabeunterstützungsinformation des Endgeräts (500) für eine medienunabhängige Übergabe, MIH, -Technologie und CoA-Information enthält, und Übertragen der zweiten Nachricht an das bedienende Netzwerk (502) umfasst.

21. Verfahren nach Anspruch 20, wobei das Empfangen der Übergabeanfrageinformation des Endgeräts (500) und der CoA umfasst:
Bestimmen, ob eine erste Nachricht von dem bedienenden Netzwerk (502) empfangen wird; und,
falls die erste Nachricht empfangen wird, Bestätigen der Endgeräteübergabeanfrageinformation und der CoA von der ersten Nachricht.

22. Verfahren nach Anspruch 20, wobei das Bestimmen umfasst:
Bestätigen von Ressourceninformation, die angefragt ist, wenn die vertikale Übergabe des Endgeräts (500) durchgeführt wird; und
Bestimmen, ob die angefragten Ressourcen an das Endgerät (500) zugewiesen werden.

23. Verfahren nach Anspruch 20, ferner umfassend:
Erzeugen eines Tunnels mit dem bedienenden Netzwerk (502), wenn die vertikale Übergabe des Endgeräts (500) unterstützt wird, und
Speichern von an das Endgerät (500) zu übertragende Daten, welche von dem bedienenden Netzwerk (502) durch den Tunnel bereitgestellt werden.

24. Verfahren nach Anspruch 20, wobei die CoA-Eindeutigkeitsüberprüfungsinformation CoA-Authentizierungsinformation enthält, falls die CoA eindeutig ist, und eine neu erzeugte CoA enthält, falls die CoA nicht eindeutig ist.

25. Verfahren nach Anspruch 22, wobei die zweite Nachricht durch Kapseln der CoA-Information in der Übergabeunterstützungsinformation des Endgeräts (500) erzeugt wird.

26. Verfahren nach Anspruch 22, wobei die zweite Nachricht durch Hinzufügen von Internet Control Message Protocol, ICMP, -Headerinformation und der CoA-Information zur Übergabeunterstützungsinformation des Endgeräts (500) erzeugt wird.

27. Verfahren nach Anspruch 22, wobei das Mobilitätsmanagementprotokoll Mobile Internet Protocol Version 6, MIPv6, und Schnellübergabe in MIPv6, FMIPv6, umfasst.

## Revendications

1. Procédé de réalisation d'un transfert vertical dans un terminal (500) d'un système de communication sans fil, le procédé étant **caractérisé par** :
la génération d'une pluralité d'adresses temporaires, cï-après désignées par CoA, en utilisant des informations de réseaux voisins candidats (504, 506) acquises auprès d'un serveur de transfert indépendant du support (508), ci-après désigné par serveur MIH, afin de réaliser un transfert vertical ;
la génération d'un premier message pour un protocole de gestion de mobilité contenant des informations de demande de transfert pour une technologie MIH et les CoA ;
la transmission du premier message à un réseau serveur (502) ;
la réception d'informations de support de transfert et des informations d'unicité de CoA des réseaux voisins candidats (504, 506), en provenance du réseau serveur (502) ; et
la détermination d'un réseau cible (504) choisi parmi les réseaux voisins candidats (504, 506) pour réaliser le transfert vertical en utilisant les informations de support de transfert, et la réalisation du transfert vertical vers le réseau cible en utilisant les informations d'unicité de CoA.

2. Procédé selon la revendication 1, dans lequel la génération des CoA comprend :
l'acquisition d'informations de préfixe de sous-réseau des réseaux voisins candidats (504, 506) auprès du serveur MIH (508) ; et
la génération de la CoA de chaque réseau voisin en utilisant les informations de préfixe de sous-réseau des réseaux voisins candidats (504, 506).

3. Procédé selon la revendication 1, dans lequel la génération des CoA comprend :
la sélection des réseaux voisins candidats (504, 506) pour réaliser le transfert vertical parmi les réseaux voisins ; et
la génération de la CoA de chaque réseau voisin candidat en utilisant des informations sur les réseaux voisins candidats (504, 506).

4. Procédé selon la revendication 1, dans lequel les informations de demande de transfert comprennent des informations sur les réseaux voisins candidats (504, 506) pour réaliser le transfert vertical et des informations de ressource demandées aux réseaux voisins candidats (504, 506) dans le transfert vertical.

5. Procédé selon la revendication 1, dans lequel le premier message est généré en encapsulant les CoA dans les informations de demande de transfert.

6. Procédé selon la revendication 1, dans lequel le premier message est généré en ajoutant un en-tête de mobilité et au moins une option de CoA alternative aux informations de demande de transfert.

7. Procédé selon la revendication 1, dans lequel le protocole de gestion de mobilité comprend un protocole Internet mobile version 6, MIPv6, et un MIPv6 de transfert rapide, FMIPv6.

8. Procédé selon la revendication 1, dans lequel la réception des informations de support de transfert et des informations d'unicité de CoA comprend :
la détermination de la réception ou non d'un deuxième message en provenance du réseau serveur (502) ; et
si le deuxième message est reçu, la confirmation du support de transfert de terminal et de l'unicité de CoA de réseaux voisins candidats (504, 506) du deuxième message.

9. Procédé de réalisation d'un transfert vertical dans un réseau serveur (502) d'un système de communication sans fil, le procédé étant **caractérisé par** :
la réception d'informations de demande de transfert et d'une pluralité d'adresses temporaires, CoA, de réseaux voisins candidats (504, 506) en provenance d'un terminal (500) ;
la génération d'un deuxième message pour un protocole de gestion de mobilité contenant des informations de demande de transfert du terminal (500) pour une technologie de transfert indépendant du support, MIH, et les CoA ;
la transmission du deuxième message aux réseaux voisins candidats (504, 506) respectifs ;
la réception d'informations de support de transfert et d'informations d'unicité de CoA pour le terminal (500), qui sont reçues en provenance des réseaux voisins candidats (504, 506) ; et
la transmission des informations de support de transfert et d'informations d'unicité de CoA au terminal (500).

10. Procédé selon la revendication 9, dans lequel la réception des informations de support de transfert et des CoA de réseaux voisins candidats comprend :
la détermination de la réception ou non d'un premier message en provenance du terminal (500) ; et
si le premier message est reçu, la confirmation des informations de demande de transfert du terminal (500) et d'une CoA en provenance du premier message.

11. Procédé selon la revendication 10, dans lequel les informations de demande de transfert comprennent des informations de ressource pour lesquelles le terminal (500) demande les réseaux voisins candidats (504, 506) dans le transfert vertical.

12. Procédé selon la revendication 10, dans lequel le deuxième message est généré en encapsulant les CoA dans les informations de demande de transfert du terminal (500).

13. Procédé selon la revendication 10, dans lequel le deuxième message est généré en ajoutant des informations d'en-tête de protocole de message de commande Internet, ICMP, une CoA que le terminal (500) utilise avec le réseau serveur (502), et des CoA générées par le terminal (500) pour les réseaux candidats (504, 506) aux informations de demande de transfert du terminal (500).

14. Procédé selon la revendication 10, dans lequel le protocole de gestion de mobilité comprend un protocole Internet mobile version 6, MIPv6, et un MIPv6 de transfert rapide, FMIPv6.

15. Procédé selon la revendication 9, dans lequel la réception des informations de support de transfert et de l'unicité de CoA comprend :
la détermination de la réception ou non d'un troisième message en provenance des réseaux voisins candidats (504, 506) ; et
si le troisième message est reçu, la confirmation du support de transfert de terminal et de l'unicité de CoA des réseaux voisins candidats (504, 506) du troisième message.

16. Procédé selon la revendication 9, comprenant en outre :
si les réseaux voisins candidats (504, 506) supportent le transfert vertical du terminal (500), l'autorisation de tunnels avec les réseaux voisins candidats (504, 506) ; et
l'acheminement de données devant être transmises vers le terminal (500) à travers les tunnels.

17. Procédé selon la revendication 9, dans lequel la transmission des informations de support de transfert et des informations d'unicité de CoA au terminal (500) comprend :
la génération d'un quatrième message pour un protocole de gestion de mobilité contenant des informations de support de transfert de terminal (500) des réseaux voisins candidats (504, 506) pour une technologie MIH et des CoA ; et
la transmission du quatrième message au terminal (500).

18. Procédé selon la revendication 17, dans lequel le quatrième message est généré en encapsulant les informations de CoA dans les informations de support de transfert du terminal (500).

19. Procédé selon la revendication 17, dans lequel le quatrième message est généré en ajoutant un en-tête de mobilité et des CoA des réseaux candidats (504, 506) aux informations de support de transfert du terminal (500).

20. Procédé de réalisation d'un transfert vertical dans un réseau cible (504) d'un système de communication sans fil, le procédé étant **caractérisé par** :
la réception d'informations de demande de transfert d'un terminal (500) et d'une adresse temporaire, CoA, qui sont reçues en provenance d'un réseau serveur (502) fournissant un service au terminal (500) ;
la détermination du support ou non du transfert vertical du terminal (500) ;
la vérification de l'unicité de la CoA ; et
la transmission d'informations indiquant si le transfert vertical du terminal (500) est supporté et des informations de vérification d'unicité de CoA au réseau serveur, dans lequel la transmission d'informations comprend la génération d'un deuxième message pour un protocole de gestion de mobilité contenant des informations de support de transfert du terminal (500) pour une technologie de transfert indépendante du support, MIH, et des informations de CoA et la transmission du deuxième message au réseau serveur (502).

21. Procédé selon la revendication 20, dans lequel la réception des informations de demande de transfert du terminal (500) et de la CoA comprend :
la détermination de la réception ou non d'un premier message en provenance du réseau serveur (502) ; et
si le premier message est reçu, la confirmation des informations de demande de transfert de terminal et de la CoA du premier message.

22. Procédé selon la revendication 20, dans lequel la détermination comprend :
la confirmation d'informations de ressource demandées lorsque le transfert vertical du terminal (500) est réalisé ; et
la détermination de l'attribution ou non des ressources demandées au terminal (500).

23. Procédé selon la revendication 20, comprenant en outre :
la génération d'un tunnel avec le réseau serveur (502) lorsque le transfert vertical du terminal (500) est supporté ; et
le stockage de données devant être transmises au terminal (500), qui sont fournies par le réseau serveur (502) à travers le tunnel.

24. Procédé selon la revendication 20, dans lequel les informations de vérification d'unicité de CoA contiennent des informations d'authentification de CoA si la CoA est unique, et contiennent une CoA venant d'être générée si la CoA n'est pas unique.

25. Procédé selon la revendication 22, dans lequel le deuxième message est généré en encapsulant les informations de CoA dans les informations de support de transfert du terminal (500).

26. Procédé selon la revendication 22, dans lequel le deuxième message est généré en ajoutant des informations d'en-tête de protocole de message de commande Internet, ICMP, et les informations de CoA aux informations de support de transfert du terminal (500).

27. Procédé selon la revendication 22, dans lequel le protocole de gestion de mobilité comprend le protocole Internet mobile version 6, MIPv6, et le MIPv6 de transfert rapide, FMIPv6.
